# EUROPÄISCHE PATENTANMELDUNG

(11) **EP 0 574 684 A2**
(43) Veröffentlichungstag der Anmeldung: **22.12.1993**
(21) Anmeldenummer: 93107056.9
(22) Anmeldetag: 30.04.1993
(51) Int. Cl.: B29C 49/04, B65D 83/14, B05B 9/08

(54) **Verfahren zur Herstellung eines Behälters**

(30) Priorität: 16.06.1992 DE 9208050 U; 19.02.1993 DE 4305130
(71) Anmelder: RAKU GmbH, D-76437 Rastatt (DE)
(72) Erfinder: Tritsch, Gerhard, W-7555 Bietigheim (DE)
(74) Vertreter: Müller, Enno, Dipl.-Ing.

(57) **Zusammenfassung**

Die Erfindung betrifft ein Verfahren zur Herstellung eines im wesentlichen zylinderförmigen, gegebenenfalls konischen Behälters (1), mit einer ersten (oberen) öffnung (10) und einer zweiten (unteren), stirnseitigen Öffnung (28), wobei, ausgehend von einem plastisch verformbaren, über einen Extruder erzeugten Kunststoffschlauch (39) der Behälter (1) im Blasverfahren geformt wird durch einen in die erste obere Öffnung (10) eingebrachten Blasdorn (52). Um eine einfache aber gleichwohl präzise Herstellung zu ermöglichen, schlägt die Erfindung vor, daß die zweite (untere) Öffnung (28) durch einen axial verfahrbaren Verschlußdorn (42) verschlossen wird.

## Beschreibung

Die Erfindung bezieht sich auf ein Verfahren zur Herstellung eines im wesentlichen zylinderförmigen, gegebenenfalls konischen Behälters mit einer ersten, oberen und einer zweiten, unteren stirnseitigen Öffnung, wobei, ausgehend von einem plastisch verformbaren, über einen Extruder erzeugten Kunststoffschlauch der Behälter im Blasverfahren ausgeformt wird durch einen in die erste Öffnung eingebrachten Blasdorn.

Die Herstellung beiderends offener Behälter geschieht bislang so, daß auf der der bereits kalibrierten, also vollständig ausgeformten Öffnung gegenüberliegenden Seite zunächst ein verlorener Kopf geblasen wird. Das verursacht Nacharbeit. In der Regel wird ein Fräsen notwendig. Das bringt für einen Massenartikel erkennbar einen heute kaum noch zu vertretenden Aufwand.

Ähnliche Behälter bilden den Grundstock markterhältlicher Spender. Dabei wird die eine Öffnung des Behälters durch schraubtechnische Zuordnung mit einer Sprühdüsen-Einheit versehen. Durch Abschrauben der Sprühdüsen-Einheit läßt sich der Behälter von dort her nachfüllen. Die andere, fußseitige Öffnung des Behälters respektive Spenders ist durch eine Pumpe besetzt. Der Zylinder dieser Pumpe geht vom Innenrand der bodenseitigen Öffnung des Behälters aus und ragt freistehend in das Innere desselben hinein und ist fest mit dem Innenrand der Öffnung verbunden, d.h. daran angeformt. Das erfordert ein Höchstmaß an Präzision.

Aufgabe der Erfindung ist es, ein Verfahren anzugeben, welches es ermöglicht, Spender der genannten Art einfacher, trotzdem präzise und daher bestückungs- und gebrauchsgünstiger sowie völlig nahtlos und ohne Endbearbeitung auszubilden.

Gelöst ist diese Aufgabe durch die im Anspruch 1 angegebene Erfindung und das im Anspruch 7 angegebene Produkt.

Die Unteransprüche sind vorteilhafte Weiterbildungen des Verfahrens respektive des Behälters.

Zufolge solcher Schritte ist ein gattungsgemäßes Verfahren zur Behälter-Herstellung verbessert. Die Berücksichtigung des sogenannten verlorenen Kopfes entfällt, auch die damit zusammenhängende aufwendige Nacharbeit. Vielmehr ist in vorteilhafter Weise eine erheblich verfahrensverbessernde Zugänglichkeit auch vom zweiten Ende des Behälters her gegeben, indem die zweite Öffnung (nicht mehr durch eine Schlauchschließstelle sprich Kopf) nun durch einen axial verfahrbaren Verschlußdorn verschlossen wird. Dadurch läßt sich dieser Öffnungsbereich formtechnisch bestens beherrschen und in Formgebungs- und Trennmaßnahmen einbeziehen. Bei einem Verfahren, bei welchem eine Blasform vorgesehen ist, wird weiter vorgeschlagen, daß sowohl mit dem Blasdorn als auch mittels des Verschlußdornes zugleich über radiale Pressung in einem Öffnungs-Halsbereich eine Gewindepressung oder dergleichen Halterungsausformung vorgenommen werden. Eine andere Halterungsauformung wäre beispielsweise ein Bördelwulst. Letzterer wie auch die Gewindepressung erscheinen als Abdrücke im Öffnungsbereich der Form liegender Formungsabschnitte. Fertigungstechnisch erweist es sich dabei als vorteilhaft, daß der Kunststoffschlauch extruderseitig aufgeweitet wird, dies so, daß ein Durchmesser des Aufweitungsbereichs einen Durchmesser des Halsbereichs einer Blasform übertrifft. Hierdurch wird der zu einem Behälter zu verformende Abschnitt des Kunststoffschlauches sicher in der Blasform gehalten. Gebildet wird der Aufweitungsbereich durch Einbringen der Blasluft, vorzugsweise von unten her, eben aufgrund des freigewordenen zweiten Weges. Mit Erreichen des maximalen Aufweitungsbereichs liegt der nächste Schritt darin, daß der Kunststoffschlauch im Bereich größten Durchmessers des Aufweitungsbereichs im wesentlichen senkrecht zur Schlaucherstreckung durchtrennt wird. Dabei ergibt sich schon eine vorteilhafte Aufweitungstülle für den von unten her zufahrenden Verschlußdorn, ebenso ein nützlicher Fangtrichter für die Blasluft. Fertigungsvorteilhaft ist es, wenn zunächst in die zweite (untere) Öffnung der Verschlußdorn einfährt und sodann in die erste (obere) Öffnung der Blasdorn. Es wird also vorrangig das untere Ende verschlossen. Nun erfolgt die Restausformung des Behälterrumpfes in den erwähnten etwa zylindrischen Wandungsverlauf und in die Schultern vorm Halsbereich. Bei Produkten mit größerer Mündungsöffnung, also etwa einem lichten Durchmesser von mehr als 28 mm, kann das Halten des Schlauches unterstützt werden, indem zusätzlich zur Preßverformung im Halsbereich ein Unterdruck erzeugt wird.

Bei einem verfahrensgemäß erzeugten Behälter zur versprühenden Ausgabe von Flüssigkeit, mit kopfseitig des Behälters angeordneter Sprühdüse und einer Handhabe für eine sich fußseitig in den Behälter erstreckenden Pumpe zur Erzeugung eines Druckluftpolsters oberhalb eines Flüssigkeitsspiegels in dem Behälter, wobei der Behälter im wesentlichen zylinderröhrenartig ausgebildet ist, erweist es sich als vorteilhaft, daß sowohl die Sprühdüse als auch die Pumpe betrieblich unlösbar an dem Behälter befestigt sind. Bei dem eingangs erläuterten bekannten Spender ist der Zylinder, wie gesagt, fest mit dem Innenrand der Öffnung verbunden. Das ist aufwendig. Der zugehörige, mit einer Handhabe versehene Kolben wird von unten her in den Zylinder eingeführt. Er ist lediglich reibungsschlüssig gehalten. Der Kolben kann vom Spender getrennt werden. Das beinhaltet die Gefahr des Verlegens. Zufolge der nun vorgenommenen Ausgestaltung ist ein gattungsgemäßer Behälter auch bestückungsmäßig verbessert. Die komplett vormontierten Funktionseinheiten werden unter Nutzung beider Enden zugeordnet. Der Behälter fungiert neben seiner Grundbestimmung so nun auch als Andock-Körper. Weitergehende Funktionen, wie beispielsweise im Stand der Technik angewandt, also den Behälter auch noch zur Mitausbildung eines Teils der Pumpe heranzuziehen, kommen in Fortfall. Insoweit können sich behälterseitige Toleranzabweichungen auch nicht funktionsstörend auswirken. Der Kolben kann nun nicht mehr herausrutschen. Er ist jetzt integraler Bestandteil der Funktionseinheit Pumpe. Die Befestigung beider Funktionseinheiten meint die Zuordnung und das willensbetonte Abnehmen. Ein solches Abnehmen einer Funktionseinheit ist für das Nachfüllen des Behälters grundsätzlich von Vorteil, hier sogar von besonderem Vorteil, weil wahlweise über den Kopf und über den Fuß nachgefüllt werden kann. Auch für das Reinigen des Behälters ist es vorteilhaft, beide Funktionseinheiten vom Behälter lösen zu können. Ist dies nicht angestrebt, kann es in bestimmten Fällen auch von Vorteil sein, daß die Sprühdüse durch Umgriff eines Bördelkragens an dem Behälter befestigt ist und daß die Pumpe mittels einer Überwurfmutter gehalten ist. Durch den in aller Regel irreversiblen Umgriff eines Bördelkragens läßt sich eine besonders feste Zuordnung erreichen, welche den erstrebten dichtenden Abschluß begünstigt. Diese Baueinheit wird alleine werksseitig fest installiert, wobei dann das Befüllen oder die Nachbefüllung über die Pumpenseite erfolgt, hier einfach durch Abschrauben der Überwurfmutter und Entnahme der Pumpe. Diese "freie" Bestückung erlaubt auch das Eingehen auf unterschiedliche Pumpensysteme, beispielsweise unter optimaler Berücksichtigung der Viskosität der zu versprühenden bzw. auszugebenden Flüssigkeit. Es können daher sowohl volumen- als auch bezüglich der Pumpe insgesamt kräftemäßig völlig unterschiedlich belastbare Zylinder eingesetzt werden. Statt der erwähnten pumpenseitigen schraubtechnischen Zuordnung kann alternativ auch eine vorteilhafte Ausgestaltung dadurch realisiert sein, daß sowohl die Sprühdüse als auch die Pumpe durch eine Schraubbefestigung gehalten sind. Als insbesondere auch recht laienfreundlich erweist sich die Maßnahme, daß sowohl die Sprühdüse als auch die Pumpe durch eine Überwurfmutter gehalten sind. Weiter ist es günstig, daß beide Gewinde den gleichen Drehsinn aufweisen. Das bringt einen sich über den Behälter übertragenden Anzug. Weiter wird vorgeschlagen, daß die Gewindeabschnitte des Behälters unterschiedlichen Durchmesser aufweisen. Es liegt also eine zusätzliche Auswahlmöglichkeit vor. Weiter erweist es sich als vorteilhaft, daß der Behälter zur Halterung der Sprühdüse einen einen Stutzen bildenden Fortsatz aufweist, der in einen Bördelwulst ausläuft. Ein solcher Bördelwulst als Halterung bringt durch die entsprechende Materialanhäufung einen äußerst stabilen Abschluß des Behältnisses, denn der Wulst erstreckt sich wie ein Reif um die dortigen Stutzenöffnung. Bördelkragen und Bördelwulst stabilisieren sich gegenseitig. Zur Erzielung optimaler Dichtverhältnisse zwischen Sprühdüsen-Einheit und Behälter, und zwar unter Einbeziehung des Behälters, wird überdies vorgeschlagen, daß die Stirnfläche des Bördelwulstes mindestens eine konzentrisch zur Stutzenöffnung verlaufende Dichtrippe besitzt, welche direkt oder über einen Dichtring im Grund des Bördelkragens zusammenwirkt. Bei zähplastischem Material des Behälters kann der Bördelwulst nämlich selbst die Funktion eines Dichtringes übernehmen; der klassische Dichtring wird dadurch sogar verzichtbar. Weiter ergibt sich eine vorteilhafte Ausgestaltung durch zwei eng beabstandete, konzentrische Dichtrippen. Eine zusätzliche Dichtzone läßt sich in diesem Zusammenhang schaffen wenn auch die Mantelfläche des Bördelwulstes umlaufende Rippen trägt. Darüber hinaus wird vorgeschlagen, daß der den Stutzen bildende Fortsatz fußseitig über eine konkave Schulter in eine hinterschnittene Rastnut übergeht. Diese dient in erster Linie zur Aufnahme von Gegenrastmitteln einer die Sprühdüse überfangenden Schutzkappe. In diesem Bereich ergibt sich so eine Art Faltenbalgzone des zweckmäßig als Blasbehältnis erstellten Behälter. Die konkave, d.h. im wesentlichen senkrecht zur Längsmittelachse des zylindrischen Behälters verlaufende Schulter bringt nämlich einen vorteilhaften Dehnungsvorrat, beispielsweise wenn der Spender ungeschützt beispielsweise der Sonnenstrahlung ausgesetzt wird, wobei es zu bombierungsartigen Verhältnissen kommen kann. Weiter ist dieser Bereich so gestaltet, daß ein forbsatzseitiger Wulst der Rastnut einen geringeren Außendurchmesser aufweist als der weitere, unmittelbar in die zylindrische Außenwandung des Behälters übergehende, untere Wulst der Rastnut. Aufgrund dieses Wandungsversatzes ergibt sich ein so weitgehendes Einrücken des stutzenseitigen, also oberen Wulstes, daß die erwähnte Schutzkappe mantelwandseitig mit der Mantelwand des Behälters fluchten kann. Die Schutzkappe kann sich also nicht durch Verhaken an irgendwelchen mitgeführten Gegenständen abstreifen. Was nun das untere, fußseitige Ende des Behälters betrifft, so ist hier so vorgegangen, daß zur Schraubbefestigung der Pumpe das Schraubgewinde an einem unteren Stutzen ausgebildet ist, der über eine Doppelschulter mit jeweils in wesentlichen ebenen Schulterflächen in die zylindrische Außenwandung des Behälters übergeht. Hier liegt eine noch prägnantere Polydirektionalität von Wandungsabschnitten vor, so daß hier gleiche faltenbalgartige Verhältnisse gegeben sind, additiv jedoch den Vorteil bringend, daß auch dort die Handhabe aufgrund des Wandungsversatzes aus einer exponierten Lage zur Mantelwandung gehalten wird. Die auch hier in wesentlichen ebenen, d.h. senkrecht zur Längsmittelachse des Gehäuses verlaufenden Schulterflächen sind unterschiedlicher Breite. Diesbezüglich hat sich eine Formel als praktisch erwiesen, daß die radiale Erstreckung der Schulterflächen zum freien Ende des dortigen Stutzens hin ca. einem Siebtel bzw. ca. einem Drittel des Querschnittsradiuses des Behälters entspricht. Der Übergang zum halsartigen Fortsatz des dortigen Stutzens ist also breiter, erfaßt durch das Merkmal, daß die größere Schulterfläche unmittelbar fußseitig des unteren Stutzens liegt. Schließlich ist es noch von Vorteil, daß oberer Stutzen und unterer Stutzen etwa gleich lang sind. Endlich besteht noch eine vorteilhafte Ausgestaltung durch einen vom Gewinde überragten Bördelwulst am freien Ende der einen stirnseitigen Öffnung des Behälters. Dadurch bleibt eine Wahlmaßnahme, nämlich die Funktionseinheit Sprühdüse anzubördeln und das Gewinde dann für eine schraubfähige Schutzkappe zu nutzen oder eine anschraubbare Pumpe von dort her zuzuordnen.

Der Gegenstand der Erfindung ist nachstehend anhand dreier zeichnerisch veranschaulichter Ausführungsbeispiele sowie des Verfahrens näher erläutert. Es zeigt
- Fig. 1: den fertig ausgerüsteten Spender in Seitenansicht, gemäß dem ersten Ausführungsbeispiel,
- Fig. 2: die zugehörige, abgehobene Schutzkappe, ebenfalls in Seitenansicht,
- Fig. 3: den Behälter in Einzeldarstellung in Seitenansicht,
- Fig. 4: die zugehörige, mit Steigrohr ausgerüstete Sprühdüsen-Einheit alleine,
- Fig. 5: ebenfalls in isolierter Darstellung die Pumpe mit Handhabe,
- Fig. 6: den Behälter im Vertikalschnitt,
- Fig. 7: eine Herausvergrößerung der Bördelzone zwischen Bördelkragen und Bördelwulst vor dem Bördeln und
- Fig. 8: dasselbe nach dem Bördeln,
- Fig. 9: den Bördelrand in weiterer Vergrößerung,
- Fig. 10: den Behälter in Einzeldarstellung in Seitenansicht, und zwar gemäß dem zweiten Ausführungsbeispiel,
- Fig. 11: eine Herausvergrößerung des hier ein Gewinde tragenden oberen Endabschnitts des Behälters,
- Fig. 12: den Behälter in unbestückter Einzeldarstellung in Seitenansicht, und zwar gemäß dem dritten Ausführungsbeispiel,
- Fig. 13: diesen Spender im Vertikalschnitt,
- Fig. 14: eine Herausvergrößerung des ein Gewinde plus Bördelwulst tragenden oberen Endabschnitts des Behälters,
- Fig. 15: einen Vertikalschnitt durch eine Blasform mit eingelassenem Kunststoffschlauch zur Bildung des Behälters,
- Fig. 16: eine gleiche Darstellung nach Abtrennen des Kunststoffschlauchs,
- Fig. 17: die gleiche Darstellung, jedoch bei unten eingetretenem Verschlußdorn und oben in Wirkung tretendem Blasdorn und
- Fig. 18: die gleiche Darstellung, jedoch bei nun auch oben vollständig eingetretenem Blasdorn unter gleichzeitiger Darstellung des Kalibrierens und des Abtrennens der sogenannten Halsbutzen.

Der dargestellte Spender Sp besitzt einen im wesentlichen zylinderröhrenförmig gestalteten Behälter 1. Dieser wird zweckmäßig im Blasverfahren erzeugt. Zur Anwendung kommt zäh-elastischer Kunststoff, beispielsweise HDPE.

Oberes und unteres Ende des als Standgerät konzipierten Behälters 1 verengen sich je zu einem Stutzon 2 bzw. 3. Auch diese sind im Grunde zylindrischer Gestalt und erstrecken sich konzentrisch zur Längsmittelachse x-x des rotationssymmetrisch geformten Behälters 1.

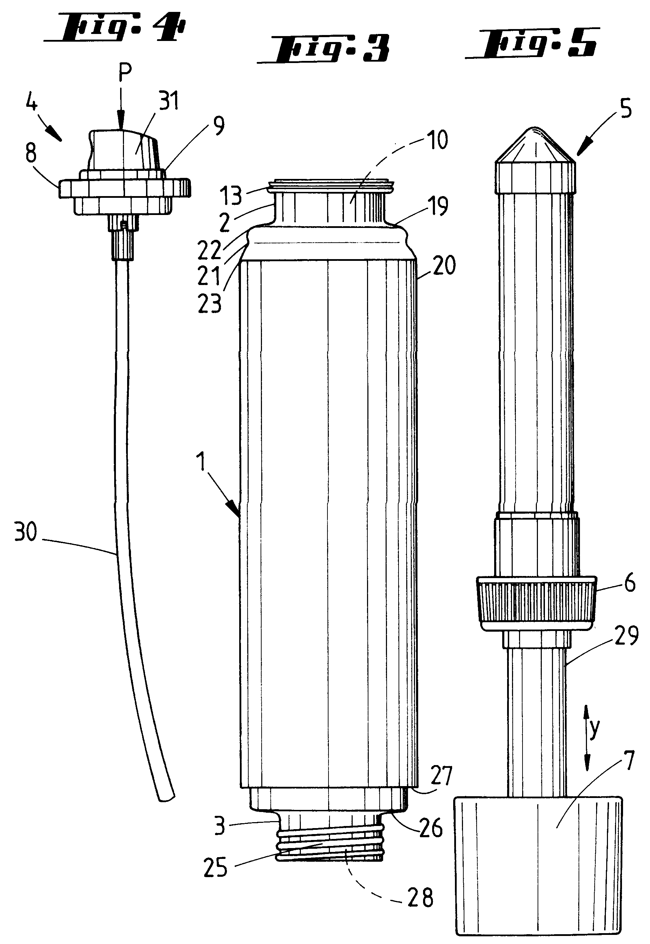

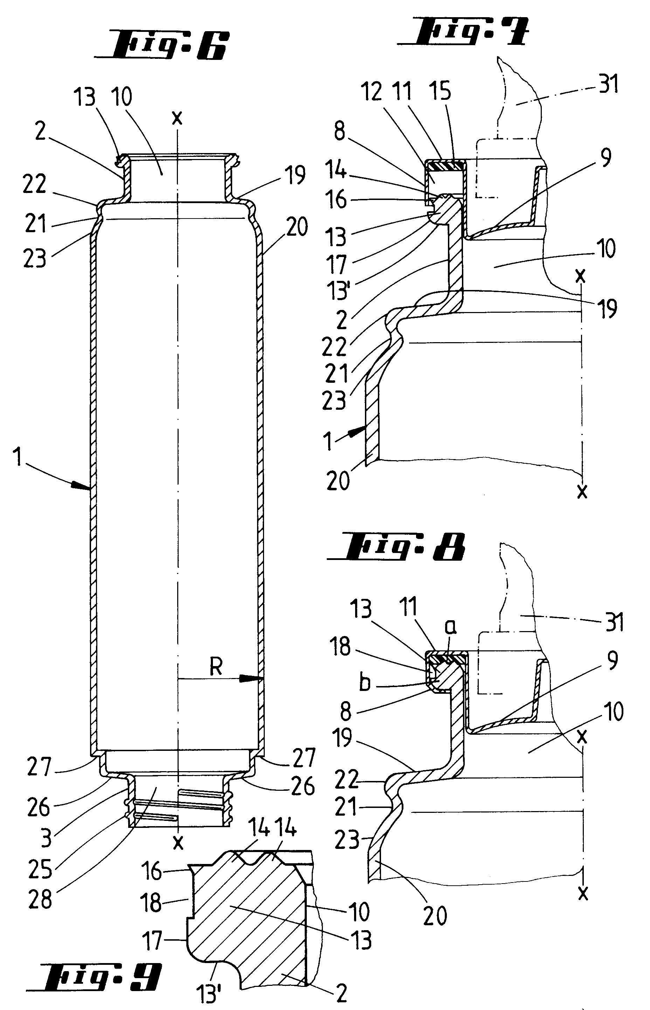

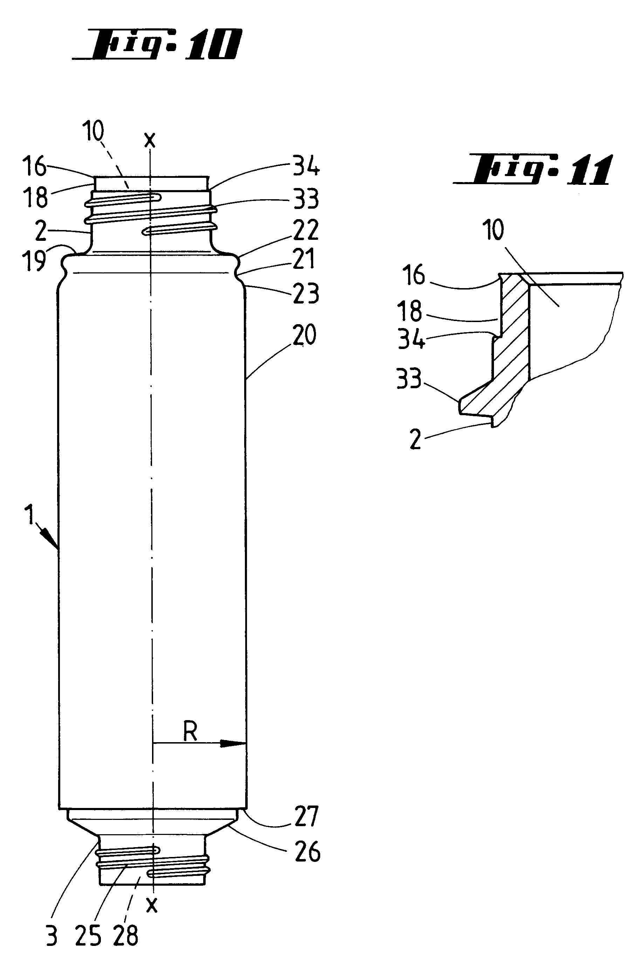

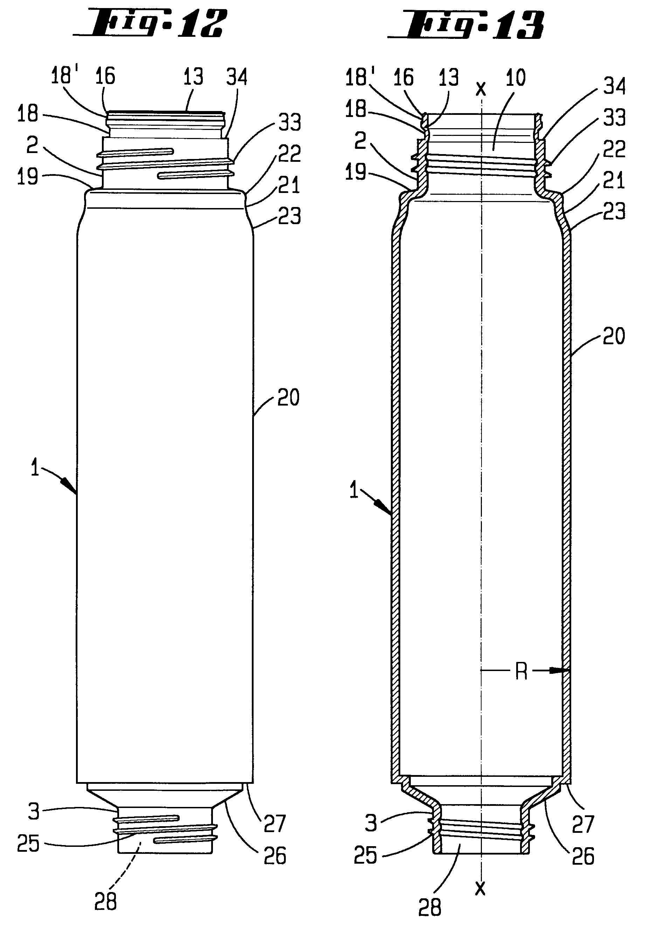

Der obere Stutzen 2 des eine zu versprühende Flüssigkeit aufnehmenden Behälters 1 ist der Zuordnung einer Sprühdüse 4 vorbehalten. Es handelt sich um eine in Figur 4 isoliert wiedergegebene Baueinheit, die am Stutzen 2 gemäß erstem Ausführungsbeispiel durch Bördelung irreversibel festgelegt wird. Mit dem anderen, unteren Stutzen 3 ist hingegen die in Figur 5 einzeln dargestellte Pumpe 5 zu verbinden, dies aber in reversibler Weise, und zwar unter Verwendung einer Überwurfmutter 6. Eine solche Pumpe 5 besitzt eine Handhabe 7. Diese steht fußseitig des Behälters 1 vor und dient im Verein mit der Pumpe 5 zur Erzeugung eines Druckluftpolsters oberhalb eines Flüssigkeitsspiegels der sich im Behälter 1 befindenden Flüssigkeit. Auch die Handhabe 7 ist zylindrisch. Ihr Außendurchmesser entspricht dem des Behälters 1. Die Bodenfläche von 7 bildet eine Standfläche.

Detailliert beschrieben sieht das Andocken der beschriebenen Funktionselemente so aus: die Baueinheit, welche die Sprühdüse 4 darstellt, besitzt einen vorzugsweise aus Metall gefertigten, kappenförmigen Bördelkragen 8. Es handelt sich um eine periphere Ringwand eines im Querschnitt rotationssymmetrisch S-förmig tiefgezogenen Tragteils 9. Letzteres ragt mit einem mittleren Abschnitt zentrierend in die dortige Öffnung bzw. Stutzenöffnung 10 des Behälters 1. Zusammen mit einem oberen Ringsteg 11, dem Bördelkragen 8 und einem einsteckenden Abschnitt des Tragteils 9 entsteht ein nach unten hin offener Steckschacht 12.

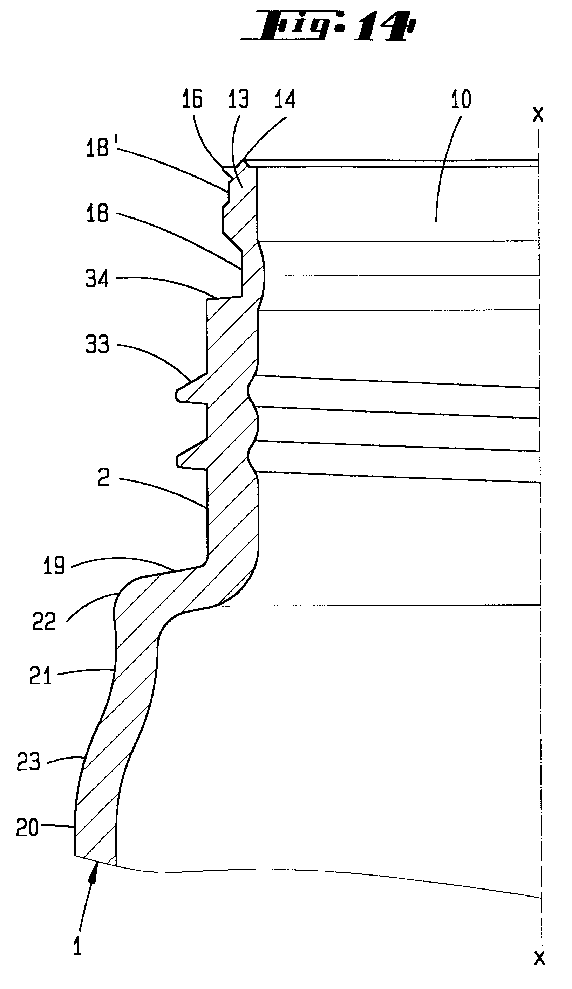

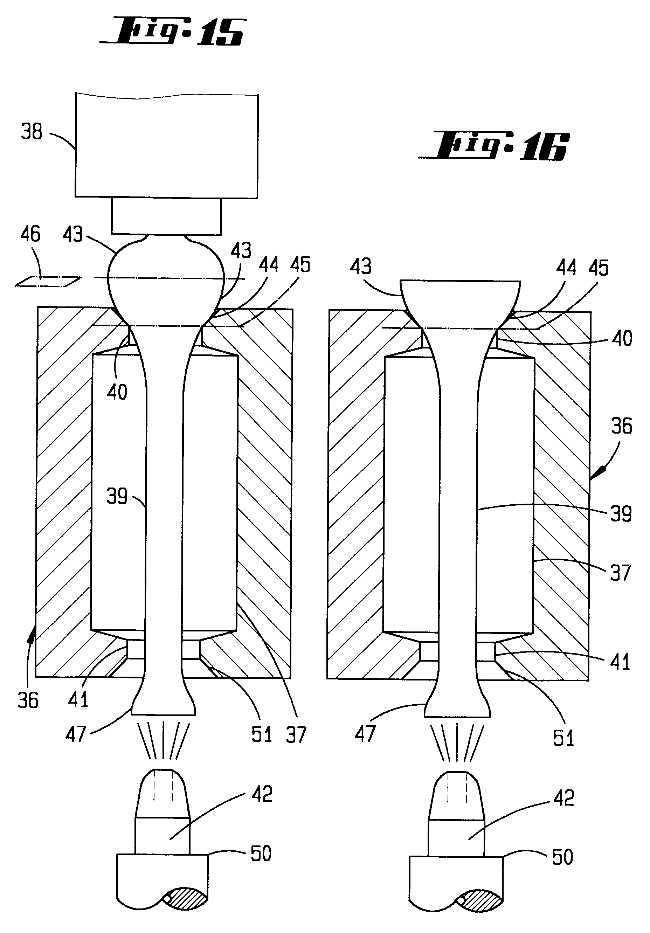

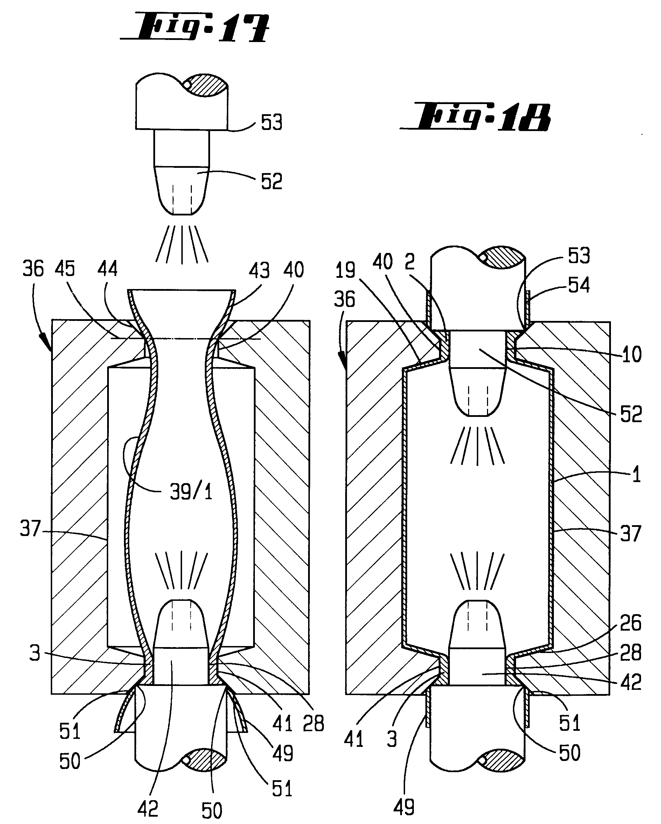

Das behälterseitige Mittel der Bördelung zwecks Halterung der Sprühdüse 4 am Behälter 1 besteht aus einem dem Stutzen 2 gleich angeformten Bördelwulst 13 Letzterer befindet sich am freien Ende des Stutzens 2 und lädt über die Mantelwand des Stutzens 2 deutlich nach auswärts aus, so daß eine Art Reif vorliegt. Dessen Breite ist auf die korrespondierende Breite des Steckschachtes 12 abgestimmt. Nach Überfangen des besagten Bördelwulstes 13 wird der untere Randabschnitt des Bördelkragens 8, wie aus Figur 8 ersichtlich, unter die hinterschnittene Flanke 13' des Bördelwulstes 13 gezwungen, d.h. untergerollt. Dadurch ist die Sprühdüse 4 am Gehäuse 1 festgelegt.

Zur Erzielung einer wirksamen Dichtung zwischen dem aufgebördelten Bördelkragen 8 und dem Gehäuse 1 ist eine schon allein aus dem verwendeten zäh-elastischen Material nutzbare Dichtzone a realisiert (vgl. Fig. 8). Diese besteht aus mindestens einer konzentrisch zur Stutzenöffnung 10 verlaufenden, an der oberen Stirnfläche des Bördelwulstes 13 ausgebildeten Dichtrippe 14. Wie der zeichnerischen Darstellung des ersten Ausführungsbeispiels entnehmbar, sind zwei eng beabstandete, konzentrische Dichtrippen 14 vorgesehen. Diese treten mittel- oder unmittelbar gegen den von der Innenseite des Ringsteges 11 gebildeten Grund des Steckschachtes 12 des Bördelkragens 8. Die Dichtrippen 14 sind im Querschnitt dreieckig gestaltet und wurzeln mit einer Dreiecksseite in der besagten Stirnfläche des Bördelwulstes 13. Hierdurch nehmen die Ecken der Dreiecke als "Schneiden" eine exponierte Lage ein.

Die mittelbare Dichtungsanlage an der Dichtrippen 14 sieht so aus, daß der Grund des Sprühdüsen-Bördelkragens 8 noch mit einem klassischen Dichtring 15 belegt ist (vgl. Figur 7).

Nicht nur die Stirnfläche des Bördelwulstes 13 bildet eine Dichtzone a, sondern auch der Bereich der Mantelfläche des Bördelwulstes 13, indem dort eine obere, schneidenartige, nach auswärts ausspitzende Rippe 16 vorgesehen ist (vgl. Fig. 9) und in Nähe der Unterflanke 13' des Bördelwulstes 13 eine zweite, breiter ausgebildete Rippe 17. Letztere geht über eine querkonvexe Rundung in die Unterflanke 13' über. Unter Umrollen des Bördelkragens 8 wird dieser mit seiner Innenseite fest gegen die erhabenen Partien sprich Rippen 16, 17 gezogen, wodurch hier eine zweite, zu a beabstandete Dichtzone b vorliegt. Zwischen Rippe 16 und Rippe 17 verbleibt ein Kurzer, axial orientierter freie Raum 18 zwischen Bördelkragen 8 und Bördelwulst 13.

Wie der zeichnerischen Darstellung weiter entnehmbar, geht der obere Stutzen 2 aufgrund einer deutlichen Durchmesserdifferenz zwischen diesem und dem Gehäuse 1 über ein markante, im wesentlichen senkrecht zur Längsmittelachse x-x stehende Schulter 19 in die Außenwandung 20 des Behälters 1 über. Dies geschieht jedoch nicht unmittelbar, sondern im Anschluß an eine Verformung, welche eine schulternahe, umlaufende Rastnut 21 bringt. Es liegt dadurch fortsatzseitig ein oberer Wulst 22 vor. Dann folgt die erzeugte Rastnut 21. Diese setzt sich sodann über einen unteren Wulst 23 in die besagte zylindrische Auswandung 20 fort.

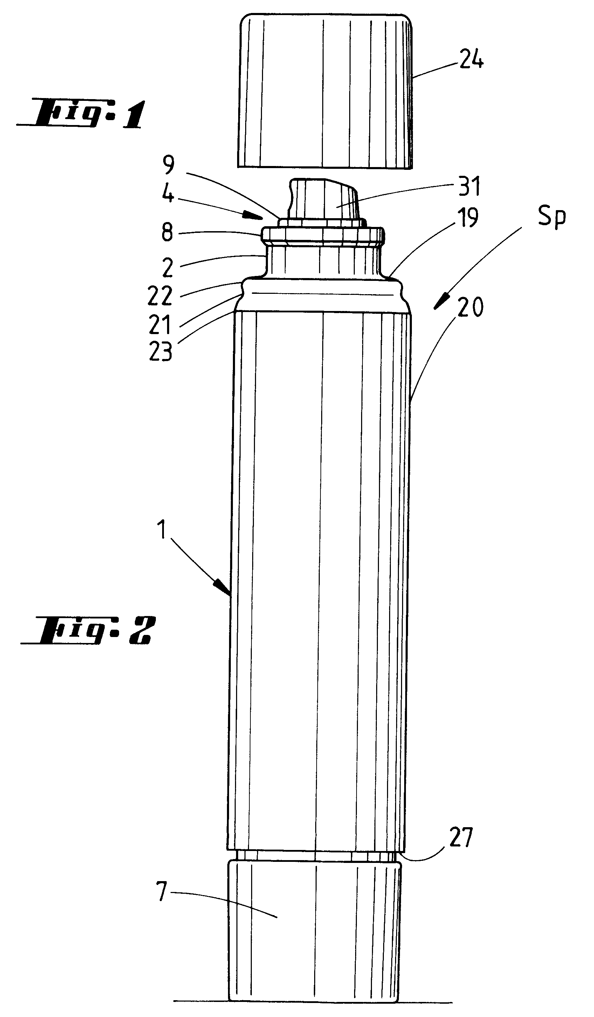

Mit der Rastnut 21 wirken Gegenrastmittel einer in Figur 2 dargestellten Schutzkappe 24 zusammen. Deren Mantelwand fluchtet in korrekt aufgestecktem Zustand ebenengleich mit der Mantelwand des Behälters 1. Dies beruht auch auf einem Wandungsversatz der Außenwandung 20 um ein der Dicke der Wandung der Schutzkappe 24 entsprechendes Maß. Das bedingt, daß der fortsatzseitige, d.h. dem oberen Stutzen 2 zugewandte Wulst 22 der Rastnut 21 einen geringeren Außendurchmesser aufweist als der breitere, unmittelbar in die Außenwandung 20 übergehende untere Wulst 23.

Nun zum unteren Stutzen 3: dieser trägt auf seiner Mantelfläche ein Schraubgewinde 25 als Außengewinde, welches mit einem entsprechenden Innengewinde der Überwurfmutter 6 zusammenwirkt.

Dieser untere Stutzen 3 weist eine axiale Länge auf, welche im wesentlichen der des oberen Stutzens 2 entspricht.

Hier geht die Außenwandung 20 des Gehäuses 1 nicht nur über eine senkrecht zur Längsmittelachse x-x des Behälters 1 verlaufende Schulter, sondern über zwei stufenförmig angeordnete Schulterflächen in den zylindrischen, konzentrisch liegenden unteren Stutzen 3 über. Diese im wesentlichen ebenen Schulterflächen sind ausgehend vom unteren Stutzen 3 mit 26 und 27 bezeichnet. Die so erzeugte Doppelschulter 26/27 geht deutlich aus der zeichnerischen Darstellung hervor. Die Breite der Schulterflächen 26, 27 ist unterschiedlich. Die größere Schulterfläche 26 setzt unmittelbar fußseitig des unteren Stutzens 3 an. Sie kann schwach geneigt abfallen. Die Schulterfläche 27 ist dagegen streng horizontal, also senkrecht zur Längsmittelachse x-x ausgerichtet.

Was die Breitendifferenz betrifft, so hat sich eine Bemessung als vorteilhaft herausgestellt, die so lautet, daß die radiale Erstreckung der Schulterflächen 26,27 in der genannten Reihenfolge etwa einem Drittel bzw. einem Siebtel des Querschnittsradiuses R des Behälters 1 entspricht (vgl. Figur 6)

Der Radius R liegt bei der dargestellten Behältergröße bei 23 mm. Die über die Stutzen 2, 3 gemessene Gesamtlänge des Gehäuses 1 entspricht ca. dem Vierfachen des Gehäusedurchmessers.

Aufgrund der beschriebenen Ausrichtung der Schulter 19 respektive Schulterflächen 26,27 ergibt sich bei erhöhtem Innendruck des Behälters 1 ein praktisch faltenbalgartig wirkender Dehnungsvorrat in diesen Zonen, so daß aufgrund überhöhter Wärmeeinstrahlung der sich hieraus ergebene Innendruck vorteilhaft kompensiert wird. Der Behälter ist daher recht druckstabil.

Nach Entfernen der Pumpe 5 aus dem unteren Stutzen 3 dient die dortige Öffnung bzw. Stutzenöffnung 28 als Füll- bzw. Nachfülloch für die zu versprühende Flüssigkeit.

Nach dem Befüllen wird unter Aufsetzen der Überwurfmutter 6 auf den besagten Stutzen 3 die Ausgabebereitschaft hergestellt. Unter hin- und hergehendem Hub eines Pumpenkolbens 29 gemäß Doppelpfeil y in Fig. 5 kann nun das Druckpolster geschaffen werden, welches die Ausgabe der Flüssigkeit über ein der Baueinheit Sprühdüse 4 zugeordnetes Steigrohr 30 bewirkt. Dies geschieht unter Ausübung einer Druckkraft in Richtung des Pfeiles P auf eine abgefederte Drucktaste 31 der Sprühdüse 4.

Der in den Figuren 10 und 11 dargestellte zylinderröhrenförmige Behälter 1 des zweiten Ausführungsbeispiels ist prinzipiell gleichen Aufbaues, daß heißt er bildet oben den beschriebenen Stutzen 2 zur Zuordnung der Sprühdüse 4 aus und unten den min 3 bezeichneten Stutzen zur Zuordnung der Pumpe 5.

Der bauliche Unterschied besteht darin, daß nun auch der obere Stutzen 2 auf seiner im wesentlichen zylindrischen Mantelfläche ebenfalls ein Schraubgewinde aufweist, bezeichnet mit 33. Die als Ganzes bezeichnete Sprühdüse 4 weist dazu anstelle des Bördelkragens 8 nun das entsprechende Gegengewinde an einem glockenartigen Tragteil auf oder sie (4) trägt eine Überwurfmutter, wie sie bezüglich der Pumpe 7 im ersten Ausführungsbeispiel beschrieben und dort mit 6 bezeichnet ist.

Im Hinblick auf den unteren Stutzen 3 können weitere textliche Ausführungen entfallen, da diese Zone praktisch in Übereinstimmung mit der im ersten Ausführungsbeispiel beschriebenen Situation steht, nur daß dort die breitere Schulterfläche 26 etwas steiler abfällt.

Hier sind also sowohl die Sprühdüse 4 als auch die Pumpe 5 betrieblich unlösbar an dem Behälter 1 befestigt. Beispielsweise die Pumpe 5 zerfällt nicht in zwei Grundbauteile, wie dies im Hinblick auf den beschriebenen Stand der Technik zutrifft. Wahlweise läßt sich die eine oder andere Funktionseinheit abschrauben und so die eine oder andere Stutzenöffnung 10 oder 28 zum Ein- oder Nachfüllen der zu versprühenden Flüssigkeit benutzen. Zu Reinigungszwecken kann die entsprechende Andockung sogar beiderends ganz aufgehoben werden, so daß sich mit einer Stielbürste der Nutzraum und die Anschlußstellen gut säubern lassen.

Die die beschriebene Schraubbefestigung ermöglichenden Stutzen 2, 3 tragen gleichsinnig verlaufende Schraubgewinde 25 bzw. 33.

Durch gleichzeitiges Zuschrauben beider Funktionsteile, nämlich Sprühdüse 4 und Pumpe 5, unter Erfassen der jeweiligen Schraubabschnitte bzw. Überwurfmuttern, ergibt sich ein Übertragen des Anzugs via Behälter 1.

Ein Vergleich zwischen oberem Stutzen 2 und unterem Stutzen 3 läßt auch erkennen, daß unterschiedliche Gewinde vorliegen. Oben handelt es sich um ein etwas größeres Schraubgewinde 33 mit einem etwas weiteren Abstand der Gewinderippen zueinander. Unten stehen sie enger. Auf diese Weise ist vermieden, daß ein Verwechseln der Funktionsteile stattfinden kann. Eine solche Ausgestaltung ist vor allem narrensicher. Außerdem resultieren hieraus Orientierungsmarken beispielsweise für das automatische Montieren des Spenders Sp.

Ein noch deutlicheres Unterschiedsmerkmal besteht sodann darin, daß die Gewindeabschnitte des Behälters 1, also die Stutzen 2, 3, unterschiedlichen Durchmesser aufweisen. Das geht ebenfalls aus Fig. 10 deutlich hervor. Der zum Andocken der Sprühdüse 4 dienende obere Stutzen 2 besitzt den größeren Außendurchmesser. Die Differenz zum Außendurchmesser des unteren, die Pumpe 5 aufnehmenden Stutzens 3 beträgt einige Millimeter.

Was schließlich die Rastmittel zur lösbaren Zuordnung der Schutzkappe 24 betrifft, so sind auch hier die Vorkehrungen identisch; ohne textliche Wiederholungen sind die entsprechenden Bezugsziffern in die Figuren 10 und 11 eingetragen.

Zu Fig. 11 bleibt noch zu erwähnen, daß der der Stutzenöffnung 10 näherliegende Mantelwandabschnitt wandungsverringernd abgesetzt ist. Hierdurch entsteht eine Ringschulter 34. Letztere dient als Schraubbegrenzungsanschlag für die Sprühdüse 4, respektive deren Überwurfmutter, und kann auch zur Abdichtung herangezogen werden.

Sodann setzt sich die senkrecht zur Längsmittelachse x-x verlaufende Stirnfläche des oberen Stutzens 2 und gegebenenfalls auch des unteren Stutzens 3 ebenenfolgend zur Stirnfläche in eine Rippe 16 fort. Letztere spitzt auswärtsgerichtet aus durch einen entsprechenden Flankenverlauf der Rippe 16. Zwischen Rippe 16 und Schulter 34 liegt somit auch hier ein kurzer, axial orientierter freier Raum 18.

Die der Stutzenöffnung 10 zugewandte, innere Randkante des Stutzens 2 und gegebenenfalls auch des Stutzens 3 ist wie auch bei der vorbeschriebenen Ausführungsform gefast.

Die in den Figuren 12 bis 14 dargestellte dritte Ausführungsform verkörpert die wesentlichen Einzelzeiten der oben beschriebenen beiden Ausführungsbeispiele. Die Bezugsziffern sind sinngemäß angewandt und daher auf das zweite Ausführungsbeispiel in weiten Bereichen lesbar.

Das dritte Ausführungsbeispiel zeigt eine Kombination aus den beiden voraufgegangenen Ausführungsbeispielen insofern, als der im ersten Ausführungsbeispiel aufscheinende Bördelwulst 13 im Bereich der oberen Öffnung 10 an dem zwei Schraubenden besitzenden Behälter 1 verwirklicht ist. Die Ausbildung ist dabei so, daß der besagte, am freien Ende des oberen Stutzens 2 sitzende Bördelwulst 13 das Schraubgewinde 23 nicht radial überragt. Der zurückspringende Durchmesser geht deutlich aus Figur 14 hervor. Der Bördelwulst 13 besitzt maximal sogar einen äußeren Durchmesser, der dort die Zwischenlage der zylindrischen Wandung des Bördelkragens 8 berücksichtigt. Dessen Mantelfläche springt im zugeordneten Zustand der Sprühdüse 4 hinter die Mantelfläche des Stutzens 2 zurück.

Weiter ist auch zwischen dem Bördelstutzen 13 und dem Stutzen 2 ein nutartig umlaufender Raum 18 berücksichtigt zum Eintritt des Halterandes des Bördelkragens 8.

Hier gelten im einzelnen auch die weitergehenden Erörterungen zu Figur 9, nur daß das auswärts gerichtete Stirnende des Bördelkragens zur Schaffung der Dichtzone a nur eine einzige Dichtrippe 14 formt.

Die mantelwandseitig ausspitzende Rippe 16 setzt sich in Richtung des Behälters 1 bzw. in Richtung der Schulter 19 nun weiterbildend in eine dem Raum 18 vergleichbare flache Rinne 18' fort, deren radiale Tiefe deutlich geringer ist als die des freien Raumes 18 zwischen Bördelwulst 13 und Stutzen 2 (vergleiche Figur 14). Wie ebenfalls Figur 14 entnehmbar, geht die peripher ausspitzende Rippe 16 zunächst über eine kerbtalartige Vertiefung in den etwas höherliegenden Grund der flachen Rinne 18' über. Die flache Rinne 18' weist querschnittsmäßig Trapezform auf mit nach außen gerichteter Divergenz ihrer Flanken.

Das Verfahren zur Herstellung des dargestellten und beschriebenen Behälters 1 wird nachstehend anhand der Figuren 15 bis 18 erläutert. Vorauszuschicken ist, daß die sich an beiden Öffnungen 10 und 28 ergebenden Details der Stutzen 2,3 dort nicht wiedergegeben sind, dies im Interesse einer klareren Darstellung des Verfahrens selbst.

Die mehr skizzenhafte Darstellung zeigt eine Blasform 36. Deren vertikal orientierte Teilungsebene in Formhälften ist durch das eingetretene Ausgangsmaterial des Behälters 1 verdeckt. Die Blasform hat ein der Kontur des zu bildenden Behälters 1 entsprechendes Formnest 37.

Oberhalb der offenen Blasform steht ein sog. Schlauchkopf 38. Dieser bringt der Blasform 36 einen Kunststoffschlauch 39 zu. Er ist extrudererzeugt und wird jeweils als Abschnitt in voller Hohlkörperlänge des zu bildenden Behälters gefahren.

Die Einhängung eines entsprechenden Abschnitts des Kunststoffschlauches 39 geschieht in einer oberen, deutlich querschnittsreduzierten Pforte 40 der Blasform 36. Die Pforte 40 ist auf den Querschnitt etc. des oberen Stutzens 2 abgestimmt.

Am Boden der Blasform 36 liegt eine zweite Pforte, bezeichnet mit 41. Diese ist in gleicher Anpassung gestaltet, also auf die zu formende, untere Öffnung 28 des Behälters 1 abgestimmt. Der Grundquerschnitt des Kunststoffschlauches 39 ist deutlich kleiner als das lichte Maß der Pforten 40,41.

Nach Schließen der Blasform 36 wird von unten her in den nach unten offenen Kunststoffschlauch 39 Stützluft eingeblasen. Dies geschieht über einen koaxial ausgerichteten unteren Blasdorn in Form eines Verschlußdornes 42. Die Luft kann auch von oben und sogar von unten und oben zugleich eingeblasen werden.

Dieser Blas-/Verschlußdorn 42 erzeugt im Inneren des Kunststoffschlauches 28 einen so ausreichenden Überdruck, daß es vor dem Schlauchkopf 38, also zwischen der verengten oberen Pforte 40 und der Unterseite des besagten Schlauchkopfes 38 zu einer markanten Aufweitung des Schlauchwandung. Dieser Aufweitungsbereich ist als ballonartige Blase 43 bezeichnet.

Diese im thermisch optimal ausgestatteten Bereich vordringlich entstehende Blase 43 bringt eine so große Aufweitung, daß der Kunststoffschlauch praktisch an der Oberkante der geschlossenen Blasform 36 durchrutschgesichert festhält, dies selbst, wenn es noch zu einer gewissen Rückstellung kommt, wie das aus Figur 17 erkennbar ist.

Die Anlage findet so an einer Übergangsstelle zwischen der im wesentlichen zylindrischen Pforte 40 und einer darüber angeordneten kegelstumpfförmigen Trichterwandung 44 statt.

Bei recht großen Öffnungen 10 des Behälters 1, beispielsweise solchen, die einen Halsdurchmesser von über 30 mm bringen, wird unterstützend eine Vakuumsituation geschaffen, die per Unterdruck die kelchartige Ausformung der unteren Blasenhälfte hält. Die entsprechende Ebene ist in der Zeichnung durch strichpunktierte Linienart wiedergegeben und mit 45 bezeichnet. Es handelt sich beispielweise um ein zentral orientiertes Kanalsystem mit Anschluß an eine nicht dargestellte, taktgesteuerte Unterdruckquelle.

So oder so wird die entstandene Blase 43 senkrecht zur vertikalen Erstreckungsebene des Kunststoffschlauches 39 durchtrennt. Die Durchtrennung, findet, wie aus Figur 15 ersichtlich, im Bereich des größten Durchmessers der Blase 43 statt. Das entsprechende Trennmesser 46 einer nicht weiter dargestellten Trenneinrichtung fährt in den vertikalen Abstandsbereich zwischen Unterseite des Schlauchkopfes 38 und Oberkante der Blasform 36 ein.

Nach Trennung vom endlos zulaufenden, intermittierend gestopten Kunststoffschlauch 39 liegt die nächste Station vor, wie sie sich aus Figur 16 ergibt.

Bleibt noch festzuhalten, daß durch den geschilderten Trennschnitt auch am schlauchkopfseitigen Ende, dem nunmehr neuen unteren Ende eines Abschnitts des Kunststoffschlauchs 39 eine Aufweitungszone 47 verbleibt, welche sich wie ein Auffangtrichter vor der Mündung des Verschlußdornes 42 erstreckt, so daß die Stützluft gebündelt eingeführt wird zur Schaffung der Blase 43 des nächsten Abschnittes des Kunststoffschlauches.

Der untere Blas-/Verschlußdorn 42 geht mit. Noch unter dem Kopf stehend wird durch diesen unteren Blasdorn 42 weiter Druckluft in den Kunststoffschlauch 39 eingeblasen. Der Kunststoffschlauch weitet sich dabei weiter im Formnest 37 auf. Dabei nähert sich zunehmend der nun in eine Art Stopfenfunktion tretende Blas-/Verschlußdorn 42 der unteren Pforte 41. Sein domförmiges, sich nach unten hin sodann deutlich konisch erbreiterndes Ende fährt in die Aufweitungszone 47 ein. Dabei wird der untere Stutzen 3 kalibriert. Der einfahrende, mehr und mehr einen größeren Querschnitt bringende Verschlußdorn 42 drückt die Schlauchwandung gegen die formbildenden Strukturen der Pforte 41, erzeugt also im Verein mit der Ausbauchung des Korpus' zugleich über die radiale Pressung im dortigen Bereich der Öffnung 28 des Stutzens 3 das Gewinde 25 oder dergleichen Halterungsausformung.

Dabei findet überlagernd dort das Abtrennen des Überschußmateriales des Kunststoffschlauches 39 statt. Es handelt sich um die auswärts gerichtete Endpartie der Aufweitungszone 47, bildend den sogenannten Halsbutzen 49. Die Abtrennung geschieht über einen Stauchring 50 am Blas-/Verschlußdorn 42. Der Stauchring 50 fährt als schneidende Kante gegen eine konzentrische, auch am unteren Ende der Blasform 36 realisierte Trichterwandung 51. Diese weitet zur Unterkante der Blasform 36 hin. Beide Trichterwandungen 44,51 haben einen Wandungswinkel zur vertikalen Längsmittelachse der Blasform 36 von 45°.

Die Blasform fährt in die nächste Station, wiedergegeben in Figur 17. Sie tritt dort unter einen oberen Blasdorn 52. Während dieser obere Blasdorn 52 vertikal in die der sicheren Hängung dienende Weitung des oberen Endes des Kunststoffschlauches 39 einfährt, wird auch durch diesen oberen Blasdorn 52 Druckluft in den Kunststoffschlauch eingeblasen. Es kommt unter Eintritt des ebenfalls domartig gestalteten, dann einen zunehmenderen Querschnitt (Konus) ausbildenden Endes des Blasdorn 52 zum Kalibrieren der dortigen Mündung des zu bildenden Behälters 1. Unter Hinweis auf die Lösung gemäß Figur 14 wird also das Außengewinde 33 durch peripheren Abdruck an der Formwand, d.h. in der Pforte 40 erzeugt und zugleich die andere Halterungsausformung in Form des Bördelwulstes 13 gebildet.

Die Pforte 40 bildet den oberen Öffnungshalsbereich des Behälters 1 und die Pforte 41 den unteren Öffnungshalsbereich desselben.

Auch ein am oberen Blasdorn 52 ausgebildeter Stauchring 53 bewirkt schließlich das Abtrennen des Überschusses, sprich dortigen Halsbutzens 54. Dort tritt entsprechend der schneidenartige Stauchring 53 gegen die Trichterwandung 44.

Nach Entfernen der beiden Halsbutzen 49,54 und Öffnen der Blasform 36 steht ein vollständig fertiger Behälter 1 zur Verfügung, einfach gebildet aus einem in der Form frei hängenden Schlauchabschnitt, der ohne seitliche Abquetschung, wie sie etwa beim Trennen des verlorenen Kopfes nötig ist, einen Hohlkörper erbringt mit zwei extrem beabstandeten Öffnungen. Dieser Körper ist völlig nahtlos und ohne Nacharbeit erzeugt. Es können die bei thermisch ansprechendem Kunststoffmaterial nutzbaren Gegebenheiten sowohl strömungstechnisch als auch in Bezug auf die angewandte Pressung optimal angewendet werden. Beide Mündungen sind im Innendurchmesser und der Planfläche glatt und ohne Bearbeitungsspuren. Von den Blasdornen her liegen also völlig glatt verpreßte Oberflächen vor.

Der beispielsweise milchige oder sonstwie gefärbte Kunststoffschlauch 39 kann einen mitlaufenden Klarsichtstreifen aufweisen, so daß am fertiggeblasenen Behälter 1 der Füllgrad der späteren Füllung wahrnehmbar wird.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

## Patentansprüche

1. Verfahren zur Herstellung eines im wesentlichen zylinderförmigen, gegebenenfalls konischen Behälters (1), mit einer ersten (oberen) Öffnung (10) und einer zweiten (unteren), stirnseitigen Öffnung (28), wobei, ausgehend von einem plastisch verformbaren, über einen Extruder erzeugten Kunststoffschlauch (39) der Behälter (1) im Blasverfahren geformt wird durch einen in die erste (obere) Öffnung (10) eingebrachten Blasdorn (52), dadurch gekennzeichnet, daß die zweite (untere) Öffnung (28) durch einen axial verfahrbaren Verschlußdorn (42) verschlossen wird.

2. Verfahren nach oder insbesondere nach Anspruch 1, dadurch gekennzeichnet, daß sowohl mit dem Blasdorn (52) als auch mittels des Verschlußdornes (42) zugleich über radiale Pressung in einem Öffnungshalsbereich eine Gewindepressung oder dergleichen Halterungsausformung vorgenommen werden.

3. Verfahren nach oder insbesondere nach einem oder mehreren der vorhergehenden Ansprüche, dadurch gekennzeichnet, daß der Kunststoffschlauch (39) extruderseitig aufgeweitet wird, dies so, daß ein Durchmesser des Aufweitungsbereichs (Blase 43) einen Durchmesser des Halsbereichs (Pforte 40) der Blasform (36) übertrifft.

4. Verfahren nach oder insbesondere nach einem oder mehreren der vorhergehenden Ansprüche, dadurch gekennzeichnet, daß der Kunststoffschlauch (39) im Bereich größten Durchmessers des Aufweitungsbereichs (Blase 43) im wesentlichen senkrecht zur Schlaucherstreckung durchtrennt wird (Figur 15).

5. Verfahren nach oder insbesondere nach einem oder mehreren der vorhergehenden Ansprüche, dadurch gekennzeichnet, daß zunächst in die (untere) Öffnung (28) der Verschlußdorn (42) einfährt, und sodann in die erste (obere) Öffnung (10) der Blasdorn (52).

6. Verfahren nach oder insbesondere nach einem oder mehreren der vorhergehenden Ansprüche, dadurch gekennzeichnet, daß zusätzlich zur Preßverformung im Halsbereich ein Unterdruck erzeugt wird (Ebene (45).

7. Behälter zum Versprühen von Flüssigkeit, vorzugsweise hergestellt nach einem Verfahren gemäß einem oder mehreren der vorhergehenden Ansprüche, mit kopfseitig des Behälters (1) angeordneter Sprühdüse (4) und einer Handhabe (7) für eine sich fußseitig in den Behälter (1) erstreckende Pumpe (5) zur Erzeugung eines Druckluftpolsters oberhalb eines Flüssigkeitsspiegels in dem Behälter (1), wobei der Behälter (1) im wesentlichen zylinderröhrenartig, gegebenenfalls konisch ausgebildet ist, dadurch gekennzeichnet, daß sowohl die Sprühdüse (4) als auch die Pumpe (5) betrieblich unlösbar an dem Behälter (1) befestigt sind.

8. Behälter nach oder insbesondere nach Anspruch 7, dadurch gekennzeichnet, daß die Sprühdüse (4) durch Umgriff eines Bördelkragens (8) an dem Behälter (1) befestigt ist und daß die Pumpe (5) mittels einer Überwurfmutter (6) gehalten ist.

9. Behälter nach oder insbesondere nach einem oder mehreren der vorhergehenden Ansprüche, dadurch gekennzeichnet, daß sowohl die Sprühdüse (4) als auch die Pumpe (5) durch eine Schraubverbindung gehalten ist.

10. Behälter nach oder insbesondere nach einem oder mehreren der vorhergehenden Ansprüche, dadurch gekennzeichnet, daß sowohl die Sprühdüse (4) als auch die Pumpe (5) durch eine Überwurfmutter gehalten sind.

11. Behälter nach oder insbesondere nach einem oder mehreren der vorhergehenden Ansprüche, dadurch gekennzeichnet, daß beide Gewinde den gleichen Drehsinn aufweisen.

12. Behälter nach oder insbesondere nach einem oder mehreren der vorhergehenden Ansprüche, dadurch gekennzeichnet, daß die Gewindeabschnitte des Behälters (1) unterschiedlichen Durchmesser aufweisen.

13. Behälter nach oder insbesondere nach einem oder mehreren der vorhergehenden Ansprüche, dadurch gekennzeichnet, daß der Behälter (1) zur Halterung der Sprühdüse (4) einen einen Stutzen (2) bildenden Fortsatz aufweist, der in einen Bördelwulst (13) ausläuft.

14. Behälter nach oder insbesondere nach einem oder mehreren der vorhergehenden Ansprüche, dadurch gekennzeichnet, daß die Stirnfläche des Bördelwulstes (13) mindestens eine konzentrisch zur Stutzenöffnung (10) verlaufende Dichtrippe (14) besitzt, welche direkt oder über einen Dichtring (15) mit dem Grund des Sprühdüsen-Bördelkragens (8) zusammenwirkt.

15. Behälter nach oder insbesondere nach einem oder mehreren der vorhergehenden Ansprüche, gekennzeichnet durch zwei beabstandete konzentrische Dichtrippen (14).

16. Behälter nach oder insbesondere nach einem oder mehreren der vorhergehenden Ansprüche, dadurch gekennzeichnet, daß auch die Mantelfläche des Bördelwulstes (13) umlaufende Rippen (16, 17) trägt.

17. Behälter nach oder insbesondere nach einem oder mehreren der vorhergehenden Ansprüche, dadurch gekennzeichnet, daß der obere Stutzen (2) fußseitig über eine konkave Schulter (19) in eine hinterschnittene Rastnut (21) übergeht.

18. Behälter nach oder insbesondere nach einem oder mehreren der vorhergehenden Ansprüche, dadurch gekennzeichnet, daß ein fortsatzseitiger Wulst (22) der Rastnut (21) einen geringeren Außendurchmesser aufweist als der weitere, unmittelbar in die zylindrische Mantelwand (20) des Behälters (1) übergehende untere Wulst (23) der Rastnut (21).

19. Behälter nach oder insbesondere nach einem oder mehreren der vorhergehenden Ansprüche, dadurch gekennzeichnet, daß zur Schraubbefestigung der Pumpe (5) das Schraubgewinde (25) an einem unteren Stutzen (3) ausgebildet ist, der über eine Doppelschulter mit jeweils im wesentlichen ebener Schulterfläche (26, 27) in die zylindrische Außenwandung (20) des Behälters (1) übergeht.

20. Behälter nach oder insbesondere nach einem oder mehreren der vorhergehenden Ansprüche, dadurch gekennzeichnet, daß die radiale Erstreckung der Schulterflächen (26, 27) zum freien Ende des dortigen Stutzens (3) des Behälters (1) hin ca. einem Siebtel bzw. ca. einem Drittel des Querschnittsradiuses (R) des Behälters (1) entspricht.

21. Behälter nach oder insbesondere nach einem oder mehreren der vorhergehenden Ansprüche, dadurch gekennzeichnet, daß die größere Schulterfläche (26) unmittelbar fußseitig des Stutzens (3) liegt.

22. Behälter nach oder insbesondere nach einem oder mehreren der vorhergehenden Ansprüche, dadurch gekennzeichnet, daß der obere Stutzen (2) und der untere Stutzen (3) etwa gleichlang sind.

23. Behälter nach oder insbesondere nach einem oder mehreren der vorhergehenden Ansprüche, gekennzeichnet durch einen vom Gewinde (33) radial überragten Bördelwulst (13) am freien Ende der einen stirnseitigen Öffnung (10) des Behälters (1).
